# EUROPEAN PATENT APPLICATION

(11) **EP 4 623 665 A1**
(43) Date of publication of application: **01.10.2025**
(21) Application number: 24219179.9
(22) Date of filing: 11.12.2024
(51) Int. Cl.: A01D 34/00

(54) **IMPROVED SCHEDULING FOR A ROBOTIC WORK TOOL**

(30) Priority: 16.02.2024 SE 2450183
(71) Applicant: Husqvarna AB, 561 82 Huskvarna (SE)
(72) Inventor: Alexiusson, Mikael, Huskvarna (SE); Kamfors, Mattias, Huskvarna (SE); Lagercrantz, Gustaf, Huskvarna (SE); Jägenstedt, Patrik, Huskvarna (SE)

(57) **Abstract**

A method for use in a robotic work tool system (200) comprising a robotic work tool (100) robotic work tool system (200) comprising a robotic work tool (100) arranged to operate in an operational area (205), said robotic work tool (100) comprising a memory (120) and an occupant sensor (175), wherein the occupant sensor is configured to detect an occupant, the memory (120) is configured to store an operating schedule indicating a behaviour of the robotic work tool (100) vis-à-vis an occupant, and wherein the method comprises operating in relation to the occupant as per the behaviour of the operating schedule.

## Description

### TECHNICAL FIELD

This application relates to a robotic work tool, such as a lawnmower, and a method for providing an improved scheduling of operation for the robotic work tool, and in particular to a robotic work tool, such as a lawnmower, and a method for providing an improved scheduling for the robotic work tool as regards occupants in a work area.

### BACKGROUND

Automated or robotic work tools such as robotic lawnmowers are becoming increasingly more popular and so is the use of the robotic work tool in various types of operational areas.

Operating requirements, in particular for robotic work tools being robotic lawnmowers, are often quite large and is occupied a large portion of the time, which requires that the scheduling of a robotic work tool is important so that occupants (humans or animals) are not unnecessarily disturbed. This is of particular importance in areas where people often spend their leisure time, such as golf courses or parks to mention a few examples. This is equally important in professional areas, such as airfields or the like, where a professional should not be disturbed when performing work tasks.

Thus, there is a need for an improved manner of scheduling robotic work tools, and in particular robotic lawnmowers.

### SUMMARY

It is therefore an object of the teachings of this application to overcome or at least reduce problems of the prior art and offer an improved scheduling by providing a robotic work tool system comprising a robotic work tool arranged to operate in an operational area, said robotic work tool comprising a controller, a memory, and an occupant sensor, wherein the occupant sensor is configured to detect an occupant, the memory is configured to store an operating schedule indicating a behaviour of the robotic work tool vis-à-vis an occupant, and the controller is configured to operate in relation to the occupant as per the behaviour of the operating schedule.

In some embodiments a behaviour indicates a distance to be kept to an occupant.

In some embodiments a behaviour indicates a maximum speed to be kept

In some embodiments a behaviour is one of the types: type 1 - follow the occupant by keeping at a set distance to the occupant and at the same speed as the occupant, type 2 - operate as per usual, type 3 - keep at a distance exceeding a minimum distance to the occupant, or type 4 - turn and propel away from occupant.

In some embodiments a behaviour further includes signalling an audio and/or visual signal.

In some embodiments the operating schedule comprises a first behaviour for a first operating instance and a second behaviour for a first operating instance, and wherein the controller is further configured to determine that a change has occurred from the first to the second operating instance and in response thereto switch from the first behaviour to the second behaviour.

In some embodiments the change is an extension of an ongoing operating instance, the second operating instance thus being an extension of the first operating instance, and wherein the second behaviour is different than the first behaviour.

In some embodiments the first behaviour is of a first type and the second behaviour is of a second type, wherein the first type of behaviour allows for approaching the occupant at a closer distance than the second type allows, and/or the first type of behaviour allows for a higher maximum speed than the second type allows.

In some embodiments the controller is further configured to store at least one occupant profile, wherein the profile is associated with a profile, compare a detected occupant to the at least one stored occupant profile, and if there is a match, operate according to the associated behaviour.

In some embodiments the controller is further configured to determine whether the profile indicates a number of occurrences exceeding or falling under a threshold value, and in response thereto take corrective action as regards the associated behaviour.

In some embodiments the corrective action as regards the associated behaviour is to remove the associated behaviour if the number of occurrences falls under a threshold value.

In some embodiments the corrective action as regards the associated behaviour is to prompt a user whether a change in behaviour is wanted.

In some embodiments an operating instance relates to at least one of a time of day, a sub-area of the operational area, a day of the week, a time of year, a week, or a month.

In some embodiments the robotic work tool further comprises a weather sensor, and wherein the controller is further configured to determine a weather factor and wherein a weather factor is associated with a behaviour.

In some embodiments a behaviour is based on number of detected occupants. In some embodiments a behaviour is based on type of detected occupants.

In some embodiments a type of occupant is an animal, a human or a human child.

In some embodiments a type of occupant is an identity of an individual occupant.

In some embodiments the occupant sensor is vision-based.

In some embodiments the occupant sensor is radar-based.

In some embodiments the robotic work tool is a robotic lawnmower.

In some embodiments the robotic work tool system further comprises a secondary system (WS), wherein the controller is further configured to control the secondary system (WS) based on the detected occupant.

It is also an object of the teachings of this application to overcome the problems of the prior art and offer an improved scheduling by providing a method for use in a method for use in a robotic work tool system comprising a robotic work tool robotic work tool system comprising a robotic work tool arranged to operate in an operational area, said robotic work tool comprising a memory and an occupant sensor, wherein the occupant sensor is configured to detect an occupant, the memory is configured to store an operating schedule indicating a behaviour of the robotic work tool vis-à-vis an occupant, and wherein the method comprises operating in relation to the occupant as per the behaviour of the operating schedule.

It is also an object of the teachings of this application to overcome the problems by providing a computer-readable medium carrying computer instructions that when loaded into and executed by a controller of a robotic work tool enables the robotic work tool to implement the method according to herein.

The embodiments herein allow for scheduling how the robotic mower behaves when encountering individuals based on time of day and work area. This allows customer to let the robot run during opening hours and have longer operations required during peak growth period.

By enabling the robotic work tool to be adaptable in its behaviour, it is able to reach maximum cutting capacity while increasing or maintaining the comfort for surrounding individuals. This also increases the perceived intelligence of the robot.

This allows for achieving maximum capacity while considering the operating (cutting) and charging times. At peak growth for grass, cutting at night may for example not be enough and during daytime there are visitors/customers who can be affected by the mower. By implementing behaviour as herein, which minimizes the effect customers can approximate the maximum cutting capacity without compromising operations.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic work tool being a robotic lawnmower according to some example embodiments of the teachings herein;
Figure 2 shows a schematic view of a robotic work tool system according to some example embodiments of the teachings herein;
Figure 3A, 3B, 3C and 3D each shows a schematic view of a robotic work tool system according to some example embodiments of the teachings herein;
Figure 4A, 4B, 4C and 4D each shows a schematic view of a robotic work tool system according to some example embodiments of the teachings herein;
Figure 5 shows a corresponding flowchart for a method according to some example embodiments of the teachings herein; and
Figure 6 shows a schematic view of a computer-readable medium carrying computer instructions that when loaded into and executed by a controller of a robotic work tool, enables the robotic work tool to implement the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools.

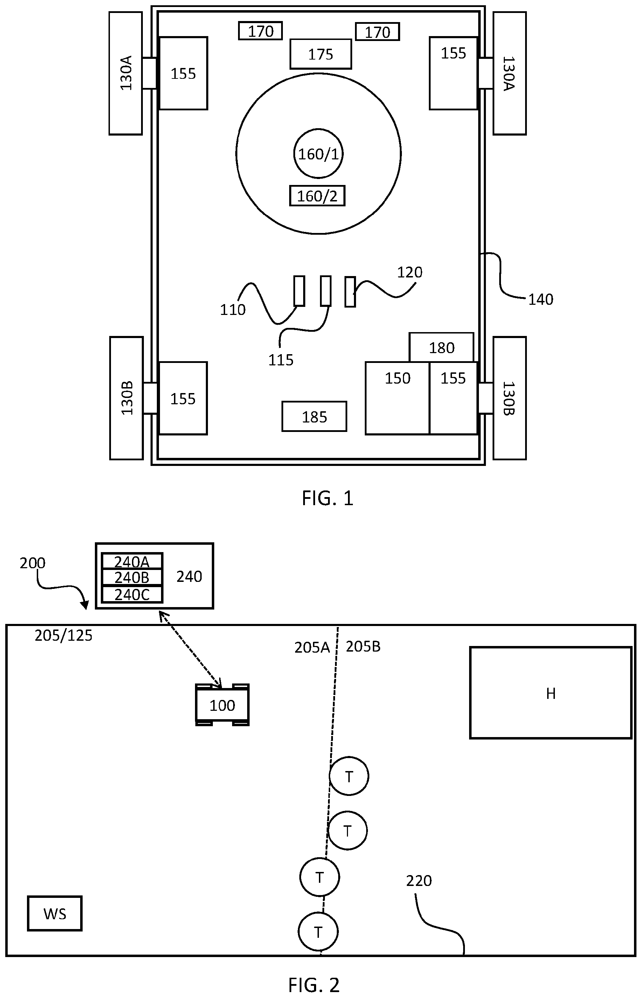

Figure 1 shows a schematic overview of a robotic work tool 100, here exemplified by a robotic lawnmower 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focussed on the example of a robotic lawnmower, the teachings may equally be applied to other types of robotic work tools, such as robotic watering tools, robotic golf ball collectors, and robotic mulchers to mention a few examples.

It should also be noted that the robotic work tool is a self-propelled robotic work tool, capable of autonomous navigation within an operational area, where the robotic work tool propels itself across or around the operational area in a pattern (random or predetermined).

The robotic work tool 100, exemplified as a robotic lawnmower 100, has a main body part 140, possibly comprising a chassis 140 and an outer shell, and a plurality of wheels 130 (in this example four wheels 130, but other number of wheels are also possible, such as three or six). The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

In some embodiments, the robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.1 1b), Global System Mobile (GSM) and LTE (Long Term Evolution), to name a few. The robotic lawnmower 100 may be arranged to communicate with a user equipment for providing information regarding status, location, and progress of operation to the user equipment as well as receiving commands or settings from the user equipment. Alternatively or additionally, the robotic lawnmower 100 may be arranged to communicate with a server for providing information regarding status, location, and progress of operation as well as receiving commands or settings. The robotic lawnmower 100 may - in some embodiments - especially be configured for transmitting sensor readings of features and receiving positional data for features.

The robotic lawnmower 100 also comprises a work tool 160, which in the example of the robotic lawnmower 100 is a grass cutting device 160, such as a rotating blade 160/2 driven by a cutter motor 160/1.

The robotic lawnmower 100 comprises one or more navigation sensors 170. In some embodiments at least one of the one or more navigation sensors 170 is a magnetic field sensor 170 arranged to detect a magnetic field and for detecting a wire and/or for receiving (and possibly also sending) information to/from a signal generator, which enables the robotic lawnmower 100 to navigate with reference to a wire, such as a boundary wire or a guide wire, emitting a magnetic field caused by a control signal transmitted through the wire, In some embodiments, such a magnetic boundary is used to provide a (electromagnetic) boundary (not shown explicitly in figure 2 but deemed to be included in the boundary 220) enclosing an operational area (referenced 205 in figure 2).

In some embodiments at least one of the one or more navigation sensors 170 is a satellite signal navigation sensor 170 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 170 is a RTK sensor. This enables the robotic work tool to operate in an operational area bounded by a virtual border (not shown explicitly in figure 2 but deemed to be included in the boundary 220).

In some embodiments at least one of the one or more navigation sensors 170 is a deduced reckoning sensor. The deduced reckoning sensor 170 may be odometers, accelerometers, and/or an Inertial Measurement Unit (IMU) sensor or other deduced reckoning sensors. In some embodiments these additional sensors 170 comprises a visual odometery sensor, possibly comprised in or connected to the deduced reckoning sensors 170. In some embodiments, the visual odometry sensor is a camera or other image sensor, allowing for image processing to be used to perform a position determination as is known in the field of robot navigation. In some embodiments, the navigation is based on SLAM, and in some embodiments, where a visual odometry sensor (such as a camera) 170 is utilized, the navigation is based on V-SLAM.

In some embodiments, the deduced reckoning sensors 170 comprises radar and/or LIDAR sensors 170.

The navigation sensors 170 enable the robot to operate according to a map of the operational area, such as the map stored in the memory 120. As mentioned, the robotic lawnmower 100 is (in some embodiments) arranged to operate according to a map application (indicated in figure 2 and referenced 125) representing one or more operational areas (and possibly the surroundings of the operational area(s)) as well as features of the operational area(s) stored in the memory 120 of the robotic lawnmower 100. In some embodiments, the map application also includes one or more transport areas. In some embodiments, the map application, or simply the map 125, may be generated or supplemented as the robotic lawnmower 100 operates or otherwise moves around in the operational area.

In some embodiments, the map 125, is generated or supplemented by the robotic lawnmower 100 uploading sensor readings to the server 240, which processes the sensor readings, identifies features, stores data on these features and forwards these stored data on the identified features to the robotic work tool 100.

The server 240 comprises a communication interface 240A, a controller 240B and a memory 240B, which operate in a manner similar to that of the controller 110, communication interface 115 and memory 120 discussed above as a skilled person would understand.

It should be understood that in some embodiments, processing is performed locally in the controller 110 of the robotic work tool 100, in some embodiments, processing is performed remotely in the controller 240B of the server 240, and in some embodiments, processing is performed partially locally in the controller 110 of the robotic work tool 100 and performed partially remotely in the controller 240B of the server 240.

The robotic lawnmower 100 also comprises one or more occupancy sensors 175 configured to detect an occupant in the operating area. In some embodiments the occupancy sensors 175 comprises visual sensors arranged to detect an occupant based on image recognition techniques. In some embodiments the occupancy sensors 175 comprises radar sensors arranged to detect an occupant based on radar techniques.

In some embodiments the robotic lawnmower 100 also comprises weather sensors, such as rain sensors 180, and/or for example slip sensors 180 (which may be implemented as part of the deduced reckoning sensors 175). Such weather sensors enable the robotic lawnmower 100 to determine weather factors, such as rain, or slip.

In some embodiments the robotic lawnmower 100 also comprises a signalling device 185 configured to provide a signal. The signal may be audio and/or visual.

In some embodiments the robotic work tool is arranged or configured to traverse and operate in operational areas, such as gardens, that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in an operational area that contains obstacles that are not easily discerned from the ground. Examples of such are grass or moss-covered rocks, roots or other obstacles that are close to ground and of a similar colour or texture as the ground. The robotic work tool is also or alternatively arranged or configured to traverse and operate in an operational area that contains obstacles that are overhanging, i.e. obstacles that may not be detectable from the ground up, such as low hanging branches of trees or bushes. Such an operational area is thus not simply a flat lawn to be mowed or similar, but an operational area of unpredictable structure and characteristics. The operational area exemplified with reference to figure 2 below, may thus be such a non-uniform operational area as disclosed in this paragraph that the robotic work tool is arranged to traverse and/or operate in.

Figure 2 shows a robotic work tool system 200 in some embodiments. The schematic view is not to scale. The robotic work tool system 200 comprises one or more robotic work tools 100 according to the teachings herein arranged to operate in one or more operational areas 205 bounded by a (virtual or other) boundary 220. It should be noted that the operational area 205 shown in figure 2 is simplified for illustrative purposes. The view of the operational area 205 is also intended to be an illustration or graphical representation of the map application 125 discussed in the above. The boundary may be a virtual boundary based on the map application 125, as discussed in the above. The virtual boundary may in some embodiments be supplemented by an electromagnetic boundary.

As with figure 1, the robotic work tool(s) is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within an operational area. In some embodiments the robotic work tool system 200 further comprises a watering system WS.

As is shown in figure 2 there may be obstacles, also referred to as features, such as houses (referenced H), structures, flowerbeds, trees (referenced T) and lamps to mention a few examples in the operational area 205. As is also shown the operating area may comprise one, two or more sub-areas 205A, 205B.

The memory 120 is configured to store an operating schedule which indicates at what time the robotic work tool should be operating, and in some embodiments, where (which operating area or sub area) the robotic work tool 100 should be operating in.

In order to maximize the time available for operating without disturbing occupants unnecessarily, the inventors have realized that the robotic work tool 100 can be assigned different operating behaviours vis-à-vis any occupants, which enables the robotic work tool 100 to operate also at times (time of day, day, week, month, or time of year) where operation normally would not be allowed or wanted as occupants may be disturbed.

The inventors are therefore providing an operating schedule that also indicates what operating behaviour the robotic work tool 100 should assume vis-à-vis an occupant as such an occupant is detected, and to associate this operating behaviour with an operating time.

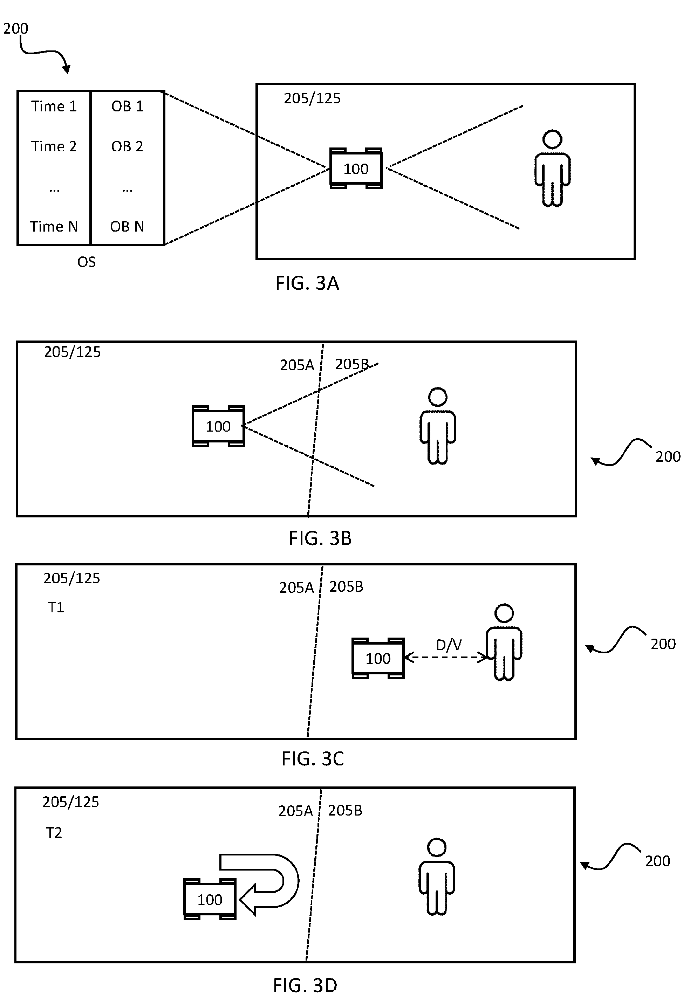

Figure 3A shows a schematic illustration of a robotic work tool system 200 as in figure 2, where such an operating schedule is schematically shown being stored in the robotic work tool 100. It should be noted that in embodiments where the robotic work tool is in communication with a server 240, the operating schedule may be stored in the server 240. For the purposes of the teachings herein no difference will be made between storing locally in the memory 120 of the robotic work tool 100 or storing remotely in the memory 240B of the server 240.

As is illustrated in figure 3A, the robotic work tool 100 stores an operating schedule OS which includes indications of operating instances (or times, time 1, time 2, ..., time N) which are associated with an operating behaviour vis-à-vis any detected occupants.

The robotic work tool 100 is configured to detect an occupant through the occupant sensor 175, and to operate in relation to the occupant as per the behaviour of the operating schedule.

Figure 3B shows a schematic illustration of a robotic work tool system 200 as in figure 3A, where the robotic work tool 100 has detected an occupant (as indicated by the dotted lines indicating a sensor range) and in response thereto retrieves the operating behaviour associated with the current operating instance and operates accordingly.

In Figure 3C, showing a situation of a first operating instance, such as during normal operating hours, T1, the associated behaviour vis-à-vis the occupant may be to keep a distance (D) to the occupant and/or speed (absolute or relative the occupant). An example of such a first operating instance is during off-hours for the operating area 205, such as for example nighttime, or when the operating area 205 is closed for visitors (such as after closing time for a golf course). During such normal (normal for the robotic work tool) operating times, occupants are normally not expected, and if expected, the occupants should be expecting the robotic work tool 100 to operate, and the operating behaviour can therefore be rather aggressive with regards to keeping a distance and/or speed. For example, the operating behaviour may simply be to ignore the occupant and carry on as usual. The operating behaviour can also be to follow the occupant (which is especially useful if the occupant is identified as being service personnel, which allows the service personnel to steer the robotic work tool 100. Alternatively, the operating behaviour can be to stay at a minimum distance to the occupant. In some embodiments such a minimum distance may be 1, 2, 3, 5, 10 meters or within any range there-in-between. Such a minimum distance may be referred to as an aggressive behaviour minimum distance.

In Figure 3D, showing a situation of a second operating instance, such as outside normal operating hours, T2, the associated behaviour vis-à-vis the occupant may also be to keep a distance (D) and/or speed to the occupant, however, such a distance would preferably be longer than in the first operating instance, and/or the speed would be lower than in the first operating instance. By keeping at a larger distance and/or lower speed, the occupant is less likely to be disturbed. An example of such a second operating instance is during open-hours for the operating area 205, such as for example day time, or when the operating area 205 is open for visitors.

During such operating times, occupants are normally expected, and any occupant would not want to be disturbed by the robotic work tool 100 when operating, and the operating behaviour should therefore be rather more passive than compared to during normal operating times (for the robotic work tool) with regards to keeping a distance and/or speed. For example, the operating behaviour may simply be to turn and move or propel away from the occupant, for example even working in a sub area (205A) that the occupant is not currently in (205B).

The operating behaviour can also or alternatively be to stay at a minimum distance to the occupant. In some embodiments such a minimum distance may be 5, 10, 15, 20 or more meters or within any range there-in-between. Such a minimum distance may be referred to as a passive behaviour minimum distance.

In some embodiments the behaviour thus indicates a distance to be kept to an occupant and/or a maximum speed to be kept, relative the occupant or an absolute speed.

A behaviour may be one of the types: type 1 - follow the occupant by keeping at a set distance to the occupant and at the same speed as the occupant, type 2 - operate as per usual, type 3 - keep at a distance exceeding a minimum distance to the occupant, or type 4 - turn and propel away from occupant.

In some embodiments, the behaviour may also include some sort of signalling, for example an audio and/or visual signal. Such signalling may be used to draw or attract the attention of the occupant to warn the occupant of the robotic work tool's presence. Such signalling may be used to draw or attract the attention of an operator, for example by signalling an alarm. The signalling may be performed using the signalling device 185.

Referring again to figures 3B, 3C and 3D the operating schedule may comprise a first behaviour for a first operating instance and a second behaviour for a second operating instance, and if the controller (110) determines that a change has occurred from the first to the second operating instance, the controller will also switch from the first behaviour to the second behaviour and operate accordingly as an occupant is detected.

In some instances, a robotic work tool 100 may determine that an ongoing operating instance should be extended, such as by increasing the cutting time for a robotic lawnmower if the grass is higher than expected. In such a case, the change from a first operating instance to a second may be the extension. And as the robotic work tool 100 is now operating outside normal operating times, the behaviour should be more passive, as it is an unexpected operation. The second operating instance is thus an extension of the first operating instance, and wherein the second behaviour is different than the first behaviour. And, in some embodiments the first behaviour is of a first type and the second behaviour is of a second type, wherein the first type of behaviour allows for approaching the occupant at a closer distance than the second type allows, and/or the first type of behaviour allows for a higher maximum speed than the second type allows.

The inventors have also realized that the behaviour may be different for different types of occupants, and/or for different gatherings of occupants. For example, an occupant being an animal may warrant an operating behaviour designed to not harm the animal, but otherwise may disturb the animal. For example, for an animal a passive behaviour may simply be to keep a (passive) minimum distance, and an aggressive behaviour may be to keep a smaller (aggressive) minimum distance. Whereas when the occupant is a human, the behaviour should be less aggressive as humans are generally more easily disturbed - or at least they will voice their concerns more loudly if disturbed.

The operating behaviour may thus be associated with a type of occupant, where the type is an animal, a human or a human child.

In some embodiments, the robotic work tool 100 is further configured to adapt its behaviour based on a number of detected occupants, where a larger number of occupants warrants a more passive behaviour as the risk of disturbing at least one of the occupants is higher, than for a small group.

In some embodiments, the robotic work tool 100 is further configured to identify individuals, such as through facial (or other person) recognition techniques, or by scanning a badge or other identifying means. This enables the robotic work tool 10 adapt its behaviour based on whether the occupant is staff or a guest.

In some such embodiments the robotic work tool is further configured to store at least one occupant profile, wherein the profile is associated with a profile, for a given occupant - or type of occupant (for example an animal, or for example an individual human) and as an occupant is detected, that occupant is compared to the at least one stored occupant profile, and if there is a match, the robotic work tool 100 will operate according to the associated behaviour. This allows the robotic work tool 100 to operate according to specific individual occupants.

This also allows the robotic work tool 100 to adapt its behaviour to commonly detected occupants and to learn during operation.

In some embodiments the robotic work tool 100 is further configured to note a number of times an occupant matching a profile is detected. If that type of occupant (for example an animal or type of animal), or a person or type of human (such as staff)) is detected a number of times (i.e. the number of occurrences) exceeds or falls under a threshold value, the robotic work tool is configured to take corrective action as regards the associated behaviour.

In some embodiments, such as when the occupant is a type of animal (for example a squirrel), and no or very few squirrels are ever detected, the corrective action as regards the associated behaviour can be to remove the associated behaviour when the number of occurrences falls under a threshold value.

In some embodiments, the corrective action as regards the associated behaviour is to prompt a user whether a change in behaviour is wanted. Such a prompt may be shown on a display of the robotic work tool 100 or be communicated through the communication interface 115 to a smartphone or other terminal of the user.

In some embodiments where the robotic work tool 100 also comprises a weather sensor, the robotic work tool 100 is further configured to determine a weather factor and associate the weather factor with a behaviour. This enables the robotic work tool 100 to adapt its behaviour based on the current weather or surroundings, as mentioned above, one weather factor may be that it is raining. Another weather factor may be that the surface of the operating area is slippery. Conversely, one weather factor may be that it is dry and/or not slippery.

This allows the robotic work tool 100 to adapt its behaviour based on the weather, where an operating behaviour allowing the robotic work tool 100 to be more aggressive may be favoured during bad weather, where the successful operation of the robotic work tool is prioritized over the potential disturbance of an occupant in bad weather.

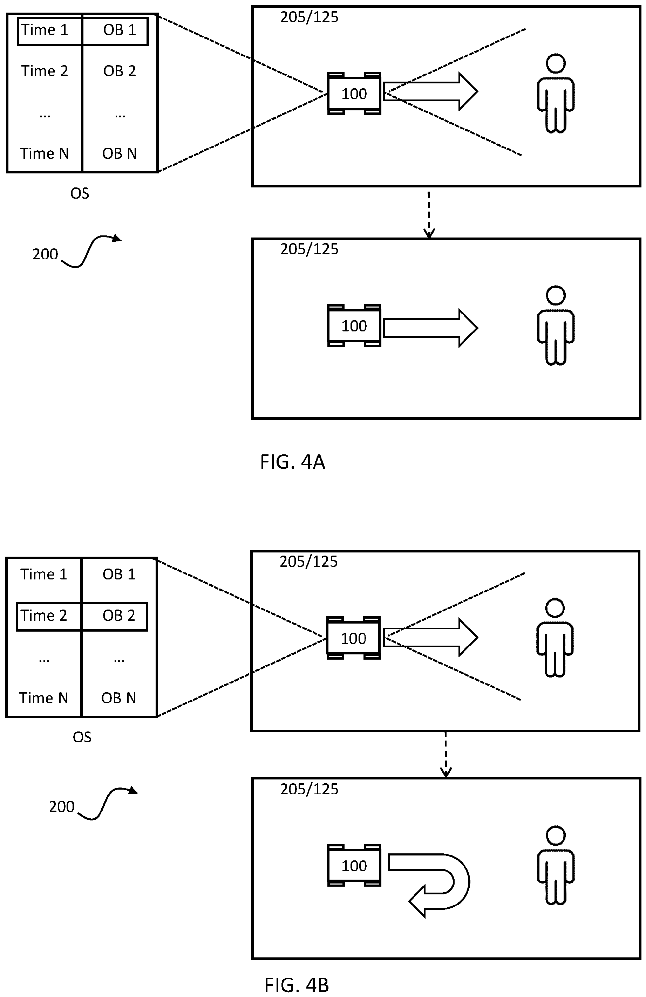

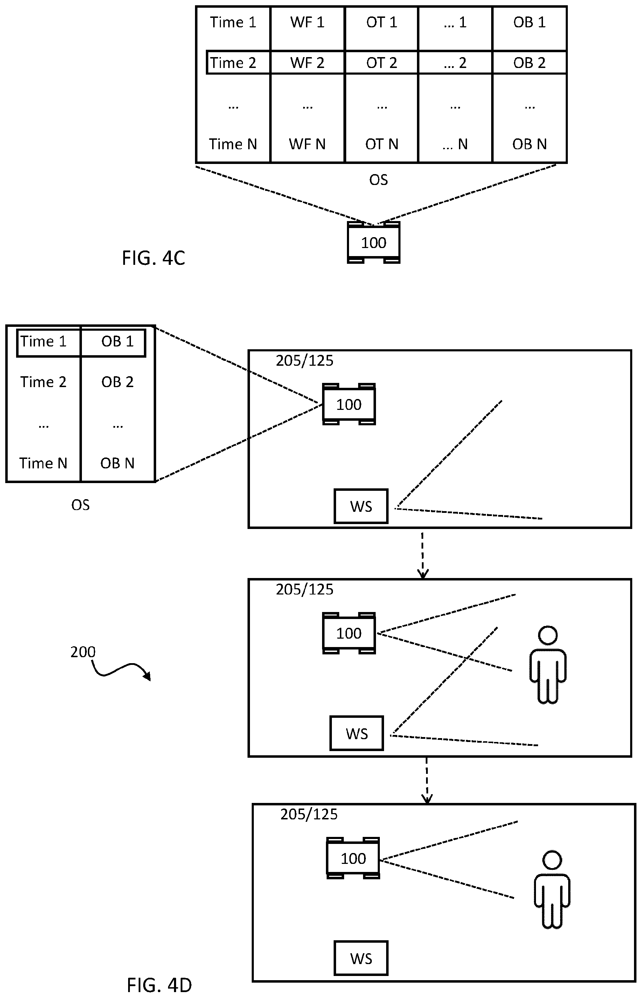

Figure 4C shows an example of an expanded operating schedule where several factors are associated, such as operating instance (Time X), Weather factor (WFX), Occupant type (OT) and so on with an operating behaviour (OB).

Figure 4D shows an example where the robotic work tool system 200 also comprises a secondary system, such as a watering system WS. In such an embodiment the robotic work tool 100 is configured to adapt the operation also of the secondary system based on the detected occupant. IN figure 4D, the watering system is active (top) and as an occupant is detected (middle) the robotic work tool 100 instructs or otherwise causes the watering system WAS to inactivate (bottom) to avoid the occupant from being disturbed by the watering system. Similarly, the robotic work tool may cause the watering system to activate as no occupant is detected. The secondary system may be controlled directly through the communication interface, or via a server 240.

The robotic work tool 100 is thus, in some embodiments, configured to control the secondary system based on the detection of an occupant.

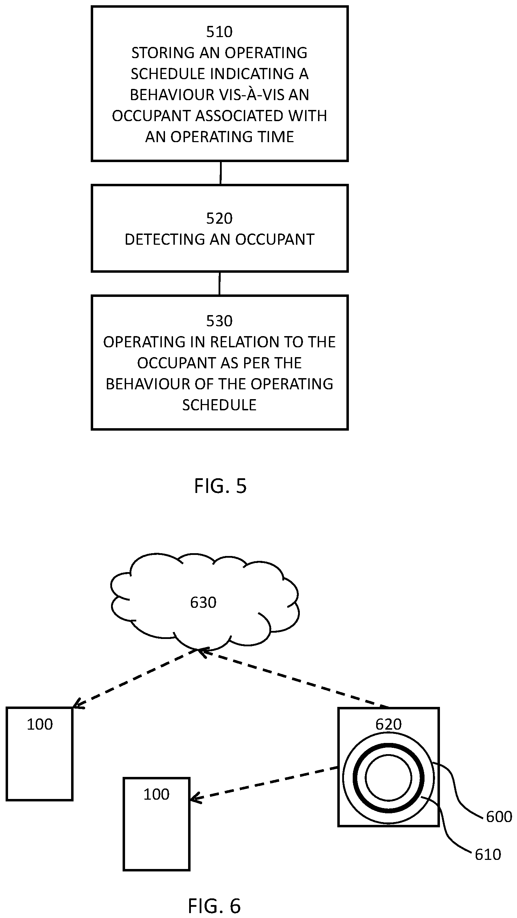

Figure 5 shows a flowchart for a general method according to herein. The method is for use in a robotic work tool as in figure 1 in a manner as discussed above in relation to figures 1, 2, 3A, 3B, 3C, 3D, 4A, 4B, 4C and 4D, namely for use in a robotic work tool system comprising a robotic work tool 100 arranged to operate in an operational area 205. The method comprises the robotic work tool 100 storing 510 an operating schedule indicating a behaviour of the robotic work tool (100) vis-à-vis an occupant, detecting 520 an occupant, and operating 530 in relation to the occupant as per the behaviour of the operating schedule, whereby the behaviour is primarily associated with an operating time as discussed in the above.

The robotic work tool, or rather the controller 110 of the robotic work tool 100 and/or the controller 240A of the server 240, determines 510 a first segmentation of the operating area (205) by minimizing (520) a navigational error introduced in the one or more satellite-shadowed areas (SA).

Figure 6 shows a schematic view of a computer-readable medium 600 carrying computer instructions 610 that when loaded into and executed by a controller of a robotic work tool 100, enables the robotic work tool 100 to implement the teachings herein. The computer-readable medium 600 may be tangible such as a hard drive or a flash memory, for example a USB memory stick or a cloud server. Alternatively, the computer-readable medium 600 may be intangible such as a signal carrying the computer instructions enabling the computer instructions to be downloaded through a network connection, such as an internet connection. In the example of figure 6, a computer-readable medium 600 is shown as being a hard drive or computer disc 600 carrying computer-readable computer instructions 610, being inserted in a computer disc reader 620. The computer disc reader 620 may be part of a cloud server 630 - or other server - or the computer disc reader 620 may be connected to a cloud server 630 - or other server. The cloud server 630 may be part of the internet or at least connected to the internet. The cloud server 630 may alternatively be connected through a proprietary or dedicated connection. In one example embodiment, the computer instructions are stored at a remote server 630 and be downloaded to the memory 120 of the robotic work tool 100 for being executed by the controller 110.

The computer disc reader 620 may also or alternatively be connected to (or possibly inserted into) a robotic work tool 100 for transferring the computer-readable computer instructions 610 to a controller of the robotic work tool 100 (presumably via a memory of the robotic work tool 100).

Figure 6 shows both the situation when a robotic work tool 100 receives the computer-readable computer instructions 610 via a server connection and the situation when another robotic work tool 100 receives the computer-readable computer instructions 610 through a wired interface. This enables for computer-readable computer instructions 610 being downloaded into a robotic work tool 100 thereby enabling the robotic work tool 100 to operate according to and implement the invention as disclosed herein.

### Examples of the present disclosure include:

1. A robotic work tool system (200) comprising a robotic work tool (100) arranged to operate in an operational area (205), said robotic work tool (100) comprising a controller (110), a memory (120), and an occupant sensor (175), wherein
   the occupant sensor is configured to detect an occupant,
   the memory (120) is configured to store an operating schedule indicating a behaviour of the robotic work tool (100) vis-à-vis an occupant, and
   the controller (110, 240A) is configured to operate in relation to the occupant as per the behaviour of the operating schedule.
2. The robotic work tool system (200) according to example 1, wherein a behaviour indicates a distance to be kept to an occupant.
3. The robotic work tool system (200) according to any preceding example, wherein a behaviour indicates a maximum speed to be kept.
4. The robotic work tool system (200) according to any preceding example, wherein a behaviour is one of the types:
   type 1 - follow the occupant by keeping at a set distance to the occupant and at the same speed as the occupant,
   type 2 - operate as per usual,
   type 3 - keep at a distance exceeding a minimum distance to the occupant, or
   type 4 - turn and propel away from occupant.
5. The robotic work tool system (200) according to any preceding example, wherein a behaviour further includes signalling an audio and/or visual signal.
6. The robotic work tool system (200) according to any preceding example, wherein the operating schedule comprises a first behaviour for a first operating instance and a second behaviour for a first operating instance, and wherein the controller (110) is further configured to determine that a change has occurred from the first to the second operating instance and in response thereto switch from the first behaviour to the second behaviour.
7. The robotic work tool system (200) according to example 6, wherein the change is an extension of an ongoing operating instance, the second operating instance thus being an extension of the first operating instance, and wherein the second behaviour is different than the first behaviour.
8. The robotic work tool system (200) according to example 7, wherein the first behaviour is of a first type and the second behaviour is of a second type, wherein the first type of behaviour allows for approaching the occupant at a closer distance than the second type allows, and/or the first type of behaviour allows for a higher maximum speed than the second type allows.
9. The robotic work tool system (200) according to any preceding example, wherein the controller (110) is further configured to
   store at least one occupant profile, wherein the profile is associated with a profile,
   compare a detected occupant to the at least one stored occupant profile, and if there is a match,
   operate according to the associated behaviour.
10. The robotic work tool system (200) according to any preceding example, wherein the controller (110) is further configured to determine whether the profile indicates a number of occurrences exceeding or falling under a threshold value, and in response thereto take corrective action as regards the associated behaviour.
11. The robotic work tool system (200) according to example 10, wherein the corrective action as regards the associated behaviour is to remove the associated behaviour if the number of occurrences falls under a threshold value.
12. The robotic work tool system (200) according to example 10 or 11, wherein the corrective action as regards the associated behaviour is to prompt a user whether a change in behaviour is wanted.
13. The robotic work tool system (200) according to any preceding example, wherein an operating instance relates to at least one of
   a time of day,
   a sub-area of the operational area,
   a day of the week,
   a time of year,
   a week, or
   a month.
14. The robotic work tool system (200) according to any preceding example, wherein the robotic work tool (100) further comprises a weather sensor, and wherein the controller is further configured to determine a weather factor and wherein a weather factor is associated with a behaviour.
15. The robotic work tool system (200) according to any preceding example, wherein a behaviour is based on number of detected occupants.
16. The robotic work tool system (200) according to any preceding example, wherein a behaviour is based on type of detected occupants.
17. The robotic work tool system (200) according to example 16, wherein a type of occupant is an animal, a human or a human child.
18. The robotic work tool system (200) according to example 16 or 17, wherein a type of occupant is an identity of an individual occupant.
19. The robotic work tool system (200) according to any preceding example, wherein the occupant sensor (175) is vision-based.
20. The robotic work tool system (200) according to any preceding example, wherein the occupant sensor (175) is radar-based.
21. The robotic work tool system (200) according to any preceding example, wherein the robotic work tool (100) is a robotic lawnmower (100).
22. The robotic work tool system (200) according to any preceding example further comprising a secondary system (WS), wherein the controller is further configured to control the secondary system (WS) based on the detected occupant.
23. A method for use in a robotic work tool system (200) comprising a robotic work tool (100) robotic work tool system (200) comprising a robotic work tool (100) arranged to operate in an operational area (205), said robotic work tool (100) comprising a memory (120) and an occupant sensor (175), wherein
   the occupant sensor is configured to detect an occupant,
   the memory (120) is configured to store an operating schedule indicating a behaviour of the robotic work tool (100) vis-à-vis an occupant, and wherein the method comprises
   operating in relation to the occupant as per the behaviour of the operating schedule.
24. A computer-readable medium (600) carrying computer instructions (610) that when loaded into and executed by a controller (110) of a robotic work tool (100) enables the robotic work tool (100) to implement the method according to example 23.

## Claims

1. A robotic work tool system (200) comprising a robotic work tool (100) arranged to operate in an operational area (205), said robotic work tool (100) comprising a controller (110), a memory (120), and an occupant sensor (175), wherein
the occupant sensor is configured to detect an occupant,
the memory (120) is configured to store an operating schedule indicating a behaviour of the robotic work tool (100) vis-à-vis an occupant, and
the controller (110, 240A) is configured to operate in relation to the occupant as per the behaviour of the operating schedule.

2. The robotic work tool system (200) according to claim 1, wherein a behaviour indicates a distance to be kept to an occupant.

3. The robotic work tool system (200) according to any preceding claim, wherein a behaviour indicates a maximum speed to be kept.

4. The robotic work tool system (200) according to any preceding claim, wherein a behaviour is one of the types:
type 1 - follow the occupant by keeping at a set distance to the occupant and at the same speed as the occupant,
type 2 - operate as per usual,
type 3 - keep at a distance exceeding a minimum distance to the occupant, or
type 4 - turn and propel away from occupant.

5. The robotic work tool system (200) according to any preceding claim, wherein a behaviour further includes signalling an audio and/or visual signal.

6. The robotic work tool system (200) according to any preceding claim, wherein the operating schedule comprises a first behaviour for a first operating instance and a second behaviour for a first operating instance, and wherein the controller (110) is further configured to determine that a change has occurred from the first to the second operating instance and in response thereto switch from the first behaviour to the second behaviour.

7. The robotic work tool system (200) according to claim 6, wherein the change is an extension of an ongoing operating instance, the second operating instance thus being an extension of the first operating instance, and wherein the second behaviour is different than the first behaviour.

8. The robotic work tool system (200) according to claim 7, wherein the first behaviour is of a first type and the second behaviour is of a second type, wherein the first type of behaviour allows for approaching the occupant at a closer distance than the second type allows, and/or the first type of behaviour allows for a higher maximum speed than the second type allows.

9. The robotic work tool system (200) according to any preceding claim, wherein the controller (110) is further configured to
store at least one occupant profile, wherein the profile is associated with a profile,
compare a detected occupant to the at least one stored occupant profile, and if there is a match,
operate according to the associated behaviour.

10. The robotic work tool system (200) according to any preceding claim, wherein the controller (110) is further configured to determine whether the profile indicates a number of occurrences exceeding or falling under a threshold value, and in response thereto take corrective action as regards the associated behaviour.

11. The robotic work tool system (200) according to claim 10, wherein the corrective action as regards the associated behaviour is to remove the associated behaviour if the number of occurrences falls under a threshold value.

12. The robotic work tool system (200) according to claim 10 or 11, wherein the corrective action as regards the associated behaviour is to prompt a user whether a change in behaviour is wanted.

13. The robotic work tool system (200) according to any preceding claim, wherein an operating instance relates to at least one of
a time of day,
a sub-area of the operational area,
a day of the week,
a time of year,
a week, or
a month.

14. A method for use in a robotic work tool system (200) comprising a robotic work tool (100) robotic work tool system (200) comprising a robotic work tool (100) arranged to operate in an operational area (205), said robotic work tool (100) comprising a memory (120) and an occupant sensor (175), wherein
the occupant sensor is configured to detect an occupant,
the memory (120) is configured to store an operating schedule indicating a behaviour of the robotic work tool (100) vis-à-vis an occupant, and wherein the method comprises
operating in relation to the occupant as per the behaviour of the operating schedule.

15. A computer-readable medium (600) carrying computer instructions (610) that when loaded into and executed by a controller (110) of a robotic work tool (100) enables the robotic work tool (100) to implement the method according to claim 14.
